# EUROPÄISCHE PATENTANMELDUNG

(11) **EP 3 912 939 A1**
(43) Veröffentlichungstag der Anmeldung: **24.11.2021**
(21) Anmeldenummer: 21174992.4
(22) Anmeldetag: 20.05.2021
(51) Int. Cl.: B65G 47/86, B25J 15/12, B65G 47/90

(54) **KLAMMERVORRICHTUNG UND BEHÄLTERBEHANDLUNGSVORRICHTUNG**

(30) Priorität: 20.05.2020 DE 102020113601
(71) Anmelder: KRONES AG, 93073 Neutraubling (DE)
(72) Erfinder: Leidel, Marco, 93073 Neutraubling (DE); Brandl, Christoph, 93073 Neutraubling (DE); Landler, Bruno, 93073 Neutraubling (DE)
(74) Vertreter: Nordmeyer, Philipp Werner

(57) **Zusammenfassung**

Die vorliegende Erfindung betrifft eine Klammervorrichtung (1) zum Halten eines Behälters (6, 6') in einer Behälterbehandlungsvorrichtung, bevorzugt zum Halten eines Getränkebehälters (6, 6') in einem Halsabschnitt oder an einem Bauchabschnitt, umfassend zwei Klammerarme (10, 10'), die jeweils einen Halteabschnitt (11) zum Halten des zu haltenden Behälters (6, 6') aufweisen, und zumindest ein Vorspannelement (2) zum Vorspannen der Halteabschnitte (11) gegeneinander, wobei die Klammerarme (10, 10') zum Verstellen des zwischen den Halteabschnitten (11) vorliegenden Abstands (15) gegen die Vorspannung des zumindest einen Vorspannelements (2) verschiebbar ausgebildet sind, sowie eine zumindest eine Klammervorrichtung (1) aufweisende Behälterbehandlungsvorrichtung (100).

## Beschreibung

### Technisches Gebiet

Die vorliegende Erfindung betrifft eine Klammervorrichtung zum Halten eines Behälters in einer Behälterbehandlungsvorrichtung, beispielsweise zum Halten eines Getränkebehälters in einem Halsabschnitt oder an einem Bauchabschnitt zum Transportieren durch die Behälterbehandlungsvorrichtung hindurch oder in Behandlungsabschnitten der Behälterbehandlungsvorrichtung, zur Übergabe von einem Behandlungsabschnitt an einen nachfolgenden Behandlungsabschnitt, sowie eine Behälterbehandlungsvorrichtung.

### Stand der Technik

Es ist bekannt, in Getränkeabfüllanlagen die jeweils zu befüllenden Behälter beziehungsweise bereits befüllte Behälter mittels Klammervorrichtungen zu halten und auf diese Weise durch die einzelnen Behandlungsstationen der Behälterbehandlungsvorrichtung zu transportieren. Dabei sind unterschiedliche Klammervorrichtungen bekannt, welche die jeweiligen zu behandelnden Behälter auf unterschiedliche Art und Weise halten.

So sind beispielsweise passive Klammervorrichtungen bekannt, welche lediglich durch das Einschieben des jeweiligen Behälters in die Klammervorrichtung elastisch vorgespannt werden und dann den jeweiligen Behälter halten. Aus der DE 10 2015 218 204 A1 ist eine solche Klammer zum Greifen von Behältern bekannt. Die Klammer weist dabei eine feste Position auf. Zum Greifen eines Behälters muss dieser in die Klammer gedrückt werden. Dabei werden die steifen Greifarme nach außen gespreizt, so dass der Behälter gegen die aufgrund des Spreizens der Klammer entstehende Schließkraft der Greifarme bewegt werden muss. Hierdurch wird der Behälter beim Einschieben mit einer hohen Kraft beaufschlagt, so dass solche Haltevorrichtungen zum Greifen beziehungsweise Halten fragiler und/oder leicht verformbarer sowie dünnwandiger Behälter nicht geeignet sind. Zumindest ist eine Neigung zum Verkratzen der Oberflächen der jeweiligen Behälter gegeben, so dass die Qualität der Behälter herabgesetzt sein kann.

Weiterhin bekannt sind aktive Klammervorrichtungen, bei welchen ein Öffnen und Schließen der jeweiligen Halteabschnitte der Klammervorrichtung mittels eines Aktuators aktiv durchgeführt wird. Solche aktiven Klammervorrichtungen dienen insbesondere dazu, eine sichere und schonende Übernahme der jeweiligen Behälter von einer vorhergehenden Klammervorrichtung zu ermöglichen oder eine ebenso sichere und behälterschonende Übergabe der Behälter an eine nachfolgende Klammervorrichtung zu gewährleisten. Insbesondere kann durch das aktive Öffnen und Schließen der jeweiligen Klammervorrichtung eine erhöhte Reibung an dem jeweiligen Behälter, welche beispielsweise zu einem Verkratzen des Behälters führen könnte, vermieden werden und andererseits kann eine vorgegebene Haltekraft beziehungsweise Klemmkraft eingestellt werden, welche innerhalb eines vorgegebenen Toleranzbereichs der Behälterdimension eingehalten werden kann. Solche aktiven Klammervorrichtungen setzen sich aus einer Vielzahl von Einzelteilen, beispielsweise Klammerarmen, Buchsen, Federelementen, Vorspannelementen und entsprechenden Verbindungselementen zum sicheren Verbinden der vorgenannten Teile, zusammen. Derart aufgebaute Klammervorrichtungen sind mithin aufwendig zu reinigen und weisen einen entsprechend hohen Fertigungsaufwand auf.

Aus der EP 0 939 044 A1 ist ein Flaschengreifer bekannt, bei welchem eine Greifvorrichtung vorgesehen ist, welche zwei Greifarme aufweist, die mittels eines Steuernockens in eine Halteposition oder eine Löseposition bringbar sind. Der Steuernocken wirkt mit einer an jedem Greifarm ausgebildeten Anlagefläche zusammen und die Anlagefläche ist als Bestandteil eines elastischen Kissens ausgebildet, welches an dem jeweiligen Greifarm angeordnet ist.

Um die Komplexität einer aktiven Klammervorrichtung zu reduzieren und gleichzeitig zu ermöglichen, dass die Klammerarme der Klammervorrichtung in einem Grundzustand eine vorgegebene Position aufweisen, beispielsweise eine geschlossene Position, ist es bekannt, Mittel an der Klammervorrichtung vorzusehen, welche auf die Klammerarme eine Vorspannung aufbringen, und so die Klammerarme in die vorgegebene Position vorzuspannen.

Aus der EP 2 143 674 A2 ist eine aktive Klammervorrichtung zum Halten von Behältern bekannt, bei welchen zwei Greifarme beziehungsweise Klammerarme mit separaten Magnetanordnungen in einer geöffneten Position gehalten werden. Die Klammerarme weisen nach hinten orientierte Schließhebel auf, welche mit einem dazwischen angeordneten Schließnocken zusammenwirken, um die Klammerarme aus der geöffneten Position in eine geschlossene Position zu bringen.

Die DE 10 2005 014 838 A1 zeigt eine aktive Klammervorrichtung zum Halten von Gefäßen mit zwei Klammerarmen, die zum Öffnen und Schließen relativ zueinander beweglich sind. Um ein sicheres Halten der Gefäße zu ermöglichen, ist ein Greifarm der Klammer formstabil und der andere Greifarm formelastisch ausgebildet. Die Greifarme werden mittels daran angeordneter Magneten in eine geöffnete Position vorgespannt und mittels eines Steuernockens in die geschlossene Position geschwenkt.

Grundsätzlich sind bei herkömmlichen Klammervorrichtungen, welche eine Vorspannung der Klammerarme in eine vorgegebene Position umfassen, die Klammerarme jeweils um eine Schwenkachse herum schwenkbar angeordnet. Mit anderen Worten können die Klammerarme der Klammervorrichtung zwischen einer geöffneten Position und einer geschlossenen Position gewechselt werden, indem die Klammerarme eine Verschwenkung bzw. Rotation erfahren. Zum Schließen der Klammervorrichtung werden die Klammerarme um die Drehachsen derart verschwenkt bzw. rotiert, dass die Halteabschnitte der Klammerarme aufeinander zu rotiert werden. Entsprechend ist zum Öffnen der Klammer eine Rotation der Klammerarme und somit der Halteabschnitte voneinander weg erforderlich. Aufgrund der rotativen Anordnung der Klammerarme kann es insbesondere, wenn die Klammervorrichtung dafür vorgesehen ist, Behälter unterschiedlicher Größe, insbesondere verschiedene Behältertypen mit unterschiedlichen Behälterdurchmessern zu halten, zwischen den einzelnen Behältertypen zu einem Versatz der Mittelachse der Behälter kommen. Mit anderen Worten können die Mittelachsen von Behältern verschiedenen Typs, wenn diese durch die Klammervorrichtung gehalten werden, bei Rundläuferkarussellen beispielsweise auf unterschiedlichen Teilkreisdurchmessern liegen.

Dies kann dazu führen, dass eine Behälterbehandlungsvorrichtung, welche auf den Teilkreis eines ersten Behältertyps ausgerichtet ist, nicht mehr passend ist zur Behandlung von Behältern eines anderen Typs, sodass eine Anpassung der Behälterbehandlungsvorrichtung, beispielsweise hinsichtlich der Lage eines Füllerrohres, erforderlich ist. Zumindest kommt es aufgrund des Schwenkens der Klammerarme um die Drehachsen dazu, dass eine resultierende, durch einen Klammerarm auf den Behälter eingeleitete Haltekraft bei Behältern mit unterschiedlichen Durchmessern unterschiedlich orientierte Kraftvektoren aufweist. Dies kann dazu führen, dass bei Einleiten einer äußeren Kraft auf den in der Klammervorrichtung gehaltenen Behälter bei einem ersten Behältertyp der Behälter sicher in der Klammervorrichtung gehalten wird, und bei einem Behälter eines anderen Typs der Behälter anders reagiert, beispielsweise durch die äußere Kraft in seiner Lage verschoben wird oder schlimmstenfalls aus den Halteabschnitten der Klammervorrichtung hinausrutscht.

Die JP 1267214 A2 zeigt ein typisches Beispiel einer Klammervorrichtung mit schwenkbaren Klammerarmen, bei welcher die Mittelachse verschiedener Behältertypen auf Teilkreisen mit unterschiedlichen Durchmessern gehalten werden, sowie die Kraftvektoren der resultierenden Haltekräfte jeweils verschieden orientiert sind.

### Darstellung der Erfindung

Ausgehend von dem bekannten Stand der Technik ist es eine Aufgabe der vorliegenden Erfindung, eine verbesserte Klammervorrichtung zum Halten eines Behälters in einer Behälterbehandlungsvorrichtung, bevorzugt zum Halten eines Getränkebehälters in einem Halsabschnitt oder an einem Bauchabschnitt, sowie eine verbesserte Behälterbehandlungsvorrichtung bereitzustellen.

Die Aufgabe wird durch eine Klammervorrichtung zum Halten eines Behälters in einer Behälterbehandlungsvorrichtung, bevorzugt zum Halten eines Getränkebehälters in einem Halsabschnitt oder an einem Bauchabschnitt mit den Merkmalen des Anspruchs 1 gelöst. Vorteilhafte Weiterbildungen ergeben sich aus den Unteransprüchen, der Beschreibung und den Figuren.

Entsprechend wird eine Klammervorrichtung zum Halten eines Behälters in einer Behälterbehandlungsvorrichtung, bevorzugt zum Halten eines Getränkebehälters in einem Halsabschnitt oder an einem Bauchabschnitt, vorgeschlagen, umfassend zwei Klammerarme, die jeweils einen Halteabschnitt zum Halten des zu haltenden Behälters aufweisen, und zumindest ein Vorspannelement zum Vorspannen der Halteabschnitte gegeneinander und besonders bevorzugt in einen vorgegebenen Abstand. Die Klammervorrichtung kennzeichnet sich ferner dadurch, dass die Klammerarme zum Verstellen des zwischen den Halteabschnitten vorliegenden Abstands gegen die Vorspannung des zumindest einen Vorspannelements verschiebbar ausgebildet sind.

Dadurch, dass die Klammerarme zum Verstellen des zwischen den Halteabschnitten vorliegenden Abstands gegen die Vorspannung des zumindest einen Vorspannelements verschiebbar ausgebildet sind, kann erzielt werden, dass verschiedene Behältertypen, welche zueinander unterschiedliche Durchmesser im Bereich des Behälters aufweisen, in welchem er durch die Haltebereiche gehalten wird, hinsichtlich ihrer Mittelachse in einem im Wesentlichen konstanten Punkt in Bezug auf die Klammervorrichtung positioniert werden können.

Infolgedessen kann dadurch ermöglicht werden, dass beispielsweise bei einer die Klammervorrichtung aufweisenden Transportvorrichtung in Rundläuferbauweise die Mittellängsachsen der unterschiedlichen Behältertypen auf einem im Wesentlichen konstanten Teilkreisdurchmesser positioniert sind, während sie durch die Klammervorrichtung gehalten werden. Zudem ist dadurch, dass die Halteabschnitte, anstelle wie es bei herkömmlichen Klammervorrichtungen der Fall ist, verschwenkt zu werden, verschiebbar ausgebildet sind, mit anderen Worten translatorisch beweglich ausgebildet sind, ermöglicht, dass die resultierenden, von einem Klammerarm auf verschiedene Behältertypen während des Haltens eingeleitete Haltekräfte im Wesentlichen die gleiche Orientierung aufweisen. Infolgedessen wird erreicht, dass Behältertypen unterschiedlichen Durchmessers durch die Klammervorrichtung stets im Wesentlichen gleichartig gehalten werden, sodass bei Einleitung einer äußeren Kraft auf einen in der Klammervorrichtung gehaltenen Behälter für verschiedene Behältertypen mit einer ähnlichen oder gar gleichen Reaktion zu rechnen ist. Folglich ist auch für unterschiedliche Behältertypen ein besonders sicheres Halten erzielt.

Gemäß einer bevorzugten Ausführungsform sind die Klammerarme entlang einer Verschieberichtung parallel verschiebbar ausgebildet. Mit anderen Worten ist ein erster der beiden Klammerarme in die Verschieberichtung parallel verschiebbar ausgebildet, und ein zweiter der beiden Klammerarme ist in derselben Verschieberichtung parallel verschiebbar ausgebildet. Mithin weisen die Klammerarme eine gemeinsame Verschiebeachse auf, zu welcher sie jeweils parallel verschiebbar ausgebildet sind.

Vorzugsweise ist der Abstand der Halteabschnitte zueinander entlang der Verschieberichtung definiert.

Gemäß einer bevorzugten Ausführungsform ist ein gemeinsames Vorspannelement zum Vorspannen beider Klammerarme vorgesehen. Alternativ oder zusätzlich kann für jeden der Klammerarme jeweils ein separates Vorspannelement bereitgestellt sein.

Um einen besonders einfachen Aufbau der Klammervorrichtung zu erzielen und zudem eine besonders einfache Fertigung der Klammervorrichtung zu ermöglichen, können die Klammerarme und das Vorspannelement einstückig miteinander ausgebildet sein. Dadurch kann zudem ein Reinigungsaufwand der Klammervorrichtung im Vergleich zu mehrteiligen Klammervorrichtungen reduziert sein.

Es hat sich als vorteilhaft herausgestellt, wenn die Klammerarme jeweils über ein Führungselement an einem Klammerträger verschiebbar geführt sind, wobei bevorzugt die Führungselemente jeweils in einer Führungsnut des Klammerträgers verschiebbar geführt, bevorzugt linear verschiebbar geführt, sind. Die Führungselemente sind dabei bevorzugt in der Verschieberichtung der Klammerarme geführt, sodass auf einfache Weise die Richtung, in der die Halteabschnitte aufeinander zu und voneinander weg bewegt werden können, vorgegeben werden kann.

Gemäß einer weiteren bevorzugten Ausführungsform ist eine Betätigungseinheit zum aktiven Bewegen der Halteabschnitte aus dem vorgegebenen Abstand vorgesehen. Die Klammervorrichtung stellt dann eine aktive Klammervorrichtung dar, bei welcher ein Öffnen oder Schließen der jeweiligen Halteabschnitte der Klammervorrichtung mittels der Betätigungseinheit aktiv durchgeführt werden kann.

Vorzugsweise ist die Betätigungseinheit derart ausgebildet, dass eine Verschiebung eines verschiebbaren Betätigungsglieds der Betätigungseinheit, bevorzugt eines in Richtung einer Längsmittelachse der Klammervorrichtung verschiebbaren Betätigungsglieds, eine Verschiebung der Klammerarme bewirkt, wobei bevorzugt eine Verschieberichtung des Betätigungsglieds quer zur Verschieberichtung der Klammerarme ausgerichtet ist.

So kann etwa bei einem Einsatz der Klammervorrichtung an einer Transportvorrichtung in Rundläuferbauweise die Bewegungsrichtung des Betätigungsglieds bezogen auf eine zentrale Drehachse der Transportvorrichtung im Wesentlichen radial orientiert sein, wohingegen die Verschieberichtung der Klammerarme bezogen auf die Drehachse im Wesentlichen tangential orientiert sein kann.

Gemäß einer weiteren bevorzugten Ausführungsform ist das Betätigungsglied mit den Klammerarmen jeweils über ein schwenkbar an dem Betätigungsglied und schwenkbar an dem jeweiligen Klammerarm angeordnetes Koppelglied gekoppelt.

Ferner kann das Betätigungsglied zumindest einen Zahnstangenabschnitt umfassen und die Klammerarme jeweils einen Zahnstangenabschnitt aufweisen, wobei jeder der beiden Klammerarme mit seinem Zahnstangenabschnitt jeweils über ein Koppel-Zahnrad mit dem zumindest einen Zahnstangenabschnitt des Betätigungsglieds gekoppelt ist.

Gemäß einer weiteren bevorzugten Ausführungsform ist das Koppelglied zum Bereitstellen der schwenkbaren Anbindung des Koppelgliedes an dem Klammerarm an dem Führungselement des Klammerarms schwenkbar angeordnet. Mit anderen Worten ist die schwenkbare Anordnung des Koppelgliedes an dem jeweiligen Klammerarm dadurch bereitgestellt, dass das Koppelglied an dem Führungselement schwenkbar angeordnet ist. Dies stellt sich insbesondere in Bezug auf die Krafteinleitung seitens des Betätigungsglieds über das Koppelglied auf den Klammerarm als vorteilhaft dar.

Gemäß einer bevorzugten Ausführungsform sind die Halteabschnitte in einen vorgegebenen Abstand zueinander vorgespannt und der vorgegebene Abstand entspricht bevorzugt einer Öffnungsposition der Halteabschnitte, wobei die Halteabschnitte durch ein Verschieben des Betätigungsgliedes in eine Schließposition bewegbar sind. Hierdurch kann erzielt werden, dass die Klammervorrichtung lediglich durch ein aktives Ansteuern via des Betätigungsgliedes in die Schließposition gebracht werden kann.

Alternativ sind die Halteabschnitte in einen vorgegebenen Abstand zueinander vorgespannt und der vorgegebene Abstand kann einer Schließposition der Halteabschnitte entsprechen und die Halteabschnitte können durch ein Verschieben des Betätigungsgliedes in eine Öffnungsposition bewegbar sein. In dieser Ausführungsform werden in der Klammer gehaltene Behälter bereits aufgrund der Vorspannung sicher gehalten, wobei ein Freigeben des gehaltenen Behälters durch ein aktives Ansteuern des Betätigungsglieds ermöglicht ist.

Für ein besonders genaues Vorgeben des Abstands der Halteabschnitte zueinander durch das Betätigungsglied kann das Betätigungsglied ein Interaktionselement zum Interagieren mit einer Vorgabevorrichtung zum Vorgeben der Position des Betätigungsglieds aufweisen. Vorzugsweise ist das Interaktionselement in Form eines Gleitelements und/oder einer Rolle, bevorzugt ausgebildet zum Gleiten und/oder Abrollen auf einer Leitkurve, ausgebildet. Hierbei hat sich als vorteilhaft herausgestellt, wenn das Interaktionselement auf einer den Klammerarmen abgewandten Seite des Betätigungsglieds angeordnet ist.

Gemäß einer weiteren bevorzugten Ausführungsform sind die Klammerarme jeweils verdrehgesichert an dem Führungselement angebunden. Vorzugsweise ist die Verdrehsicherung hierbei zwischen Klammerarm und Führungselement in Form eines Formschlusses ausgebildet. Die Verdrehsicherung kann beispielsweise eine Stiftverbindung und/oder eine Polygonkontur umfassen. Alternativ oder zusätzlich können die Klammerarme jeweils in zwei parallel verlaufenden, zueinander beabstandeten Führungsnuten am Klammerträger geführt sein. Bevorzugt sind die Führungselemente jeweils verdrehgesichert in einer Führungsnut am Klammerträger verschiebbar geführt.

Gemäß einer weiteren bevorzugten Ausführungsform erstrecken sich die Klammerarme und die Betätigungseinheit im Wesentlichen in einer Ebene. Anders ausgedrückt befinden sich die Klammerarme und die Betätigungseinheit bezogen auf eine Einbauposition der Klammervorrichtung an einer Transportvorrichtung einer Behälterbehandlungsvorrichtung im Wesentlichen auf der gleichen Höhenposition in Bezug auf die Transportvorrichtung bzw. die Erdbeschleunigung. Dies kann hinsichtlich des bei der Behälterbehandlungsvorrichtung zur Verfügung stehenden Bauraums vorteilhaft sein. Insbesondere bei Behälterbehandlungsvorrichtungen in Getränkeabfüllanlagen ist der Bauraum unterhalb und oberhalb der Höhenposition der Klammerarme stark eingeschränkt. Zudem kann durch das Vorsehen der Klammerarme und der Betätigungseinheit auf einer Ebene ein besonders einfacher Aufbau der Behälterbehandlungsvorrichtung erzielt werden. Als besonders vorteilhaft hat sich herausgestellt, wenn das Betätigungsglied hierbei teilweise, vorzugsweise großteils besonders bevorzugt im Wesentlichen gänzlich auf der den Halteabschnitten gegenüberliegenden Seite in Bezug auf die Klammerarme angeordnet ist.

Gemäß einer weiteren bevorzugten Ausführungsform weist das Vorspannelement einen elastischen, sich von einem Klammerarm zu dem anderen Klammerarm erstreckenden Federbügel auf, wobei bevorzugt der Federbügel an den Klammerarmen jeweils zwischen dem Halteabschnitt und einem Führungselement-Anbindungsabschnitt angebunden ist, oder der Federbügel an dem jeweiligen Klammerarm jeweils im Bereich des Halteabschnitts angebunden ist. Bevorzugt erstrecken sich der Federbügel und die Klammerarme hierbei im Wesentlichen in einer Ebene. Der Federbügel kann vorzugsweise ferner ein Versteifungselement zum Versteifen eines Mittelbereichs des Federbügels aufweisen. Vorzugsweise sind die Klammerarme und der Federbügel einstückig ausgebildet.

Die oben gestellte Aufgabe wird weiterhin durch eine Behälterbehandlungsvorrichtung, bevorzugt eine Behälterbehandlungsvorrichtung für eine Getränkeabfüllanlage, mit den Merkmalen des Anspruchs 14 gelöst. Weiterbildungen ergeben sich aus den Unteransprüchen sowie der vorliegenden Beschreibung und den Figuren.

Entsprechend wird eine Behälterbehandlungsvorrichtung vorgeschlagen, umfassend eine Transportvorrichtung zum Transportieren eines Behälters. Die Behälterbehandlungsvorrichtung kennzeichnet sich dadurch, dass die Transportvorrichtung zumindest eine Klammervorrichtung gemäß einem der vorstehenden Ausführungsformen aufweist.

Dadurch, dass die Transportvorrichtung zumindest eine Klammervorrichtung gemäß einem der vorstehenden Ausführungsformen aufweist, können die hinsichtlich der Klammervorrichtung beschriebenen Vorteile und Wirkungen in analoger Weise auch durch die Behälterbehandlungsvorrichtung erzielt werden.

Insbesondere, wenn die Klammervorrichtung eingerichtet ist, den Behälter an einem Behälterbauch zu halten, beispielsweise zur Unterstützung bei einer Behälterbehandlungsvorrichtung, bei welcher die Behälter mittels des sogenannten Basehandling-Prinzips transportiert werden, hatte sich als vorteilhaft herausgestellt, wenn die Klammervorrichtung zum Halten eines Behälters eine Mehrzahl von in Bezug auf eine Einbauposition der Klammervorrichtung in Höhenrichtung voneinander beabstandeten Paare von Klammerarmen aufweist.

Bevorzugt weist die Klammervorrichtung ein oberes Paar von Klammerarmen und ein unteres Paar von Klammerarmen auf, welche mit einem vorgegebenen Abstand voneinander in Höhenrichtung beabstandet sind. Die Klammervorrichtung kann für beide Klammerarmpaare ein gemeinsames Betätigungsglied aufweisen, oder alternativ für jedes Klammerarmpaar ein separates Betätigungsglied aufweisen. In letzterem Falle können die Klammerarme eines Paares und das diesen zugeordnete Betätigungsglied im Wesentlichen in einer Ebene angeordnet sein bzw. sich im Wesentlichen in einer Ebene erstrecken. Mit anderen Worten erstrecken sich die beiden Klammerarme des ersten Paares zusammen mit deren Betätigungsglied in einer ersten Ebene, und es erstrecken sich die beiden Klammerarme des weiteren Paares zusammen mit deren Betätigungsglied in einer von der ersten Ebene beabstandeten weiteren Ebene, wobei die erste Ebene und die weitere Ebene parallel zueinander ausgerichtet sind.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische seitliche Draufsicht auf eine Klammervorrichtung zum Halten eines Behälters in einer Behälterbehandlungsvorrichtung gemäß einer ersten Ausführungsform;
- Figur 2: schematisch eine Draufsicht einer einteiligen Klammer der Klammervorrichtung aus Figur 1;
- Figur 3: schematisch eine Draufsicht der Klammervorrichtung aus Figur 1;
- Figur 4: schematisch eine Seitenansicht der Klammervorrichtung aus Figur 1;
- Figur 5: schematisch eine perspektivische Seitenansicht einer Behälterbehandlungsvorrichtung mit einer Vielzahl von Klammervorrichtungen;
- Figur 6: schematisch eine perspektivische Seitenansicht einer Behälterbehandlungsvorrichtung gemäß einer weiteren Ausführungsform;
- Figur 7: schematisch eine Draufsicht der Behälterbehandlungsvorrichtung aus Figur 6; und
- Figur 8: schematisch eine weitere Draufsicht der Behälterbehandlungsvorrichtung aus Figur 6.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

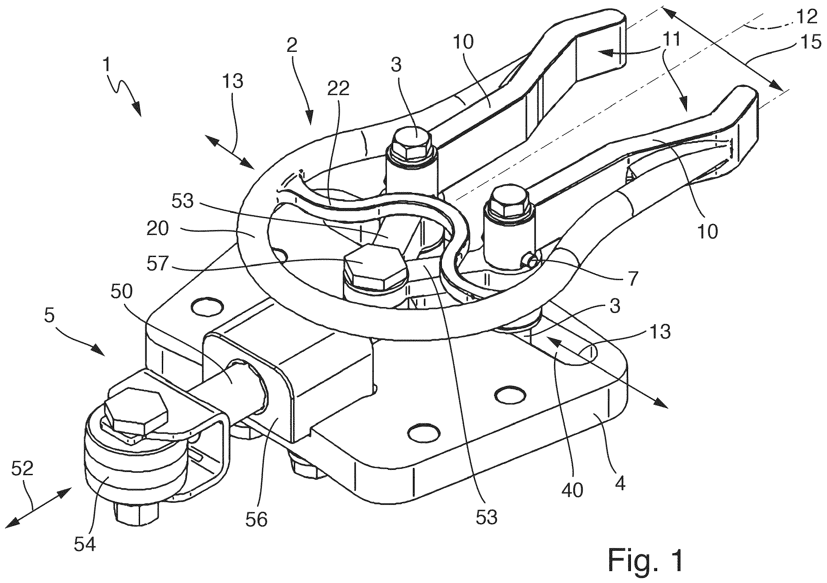

In Figur 1 ist schematisch eine perspektivische seitliche Draufsicht auf eine Klammervorrichtung 1 zum Halten eines Behälters in einer Behälterbehandlungsvorrichtung gemäß einer ersten Ausführungsform gezeigt. Die Klammervorrichtung 1 umfasst zwei bezüglich einer Längsmittelachse 12 der Klammervorrichtung 1 gegenüber einander angeordnete Klammerarme 10, welche jeweils einen Halteabschnitt 11 zum Halten des zu haltenden Behälters aufweisen. Die Klammerarme 10 sind mittels eines Vorspannelements 2 aufeinander zu vorgespannt.

Entsprechend sind die Klammerarme 10 in einen vorgegebenen Abstand 15 zueinander vorgespannt, wobei der vorgegebene Abstand 15 einer geschlossenen Position der Klammerarme 10 bzw. der Halteabschnitte 11 entspricht.

Die Klammerarme 10 sind zum Verstellen des zwischen den Halteabschnitten 11 vorliegenden Abstands 15 gegen die Vorspannung des Vorspannelements 2 verschiebbar ausgebildet.

Hierbei sind die Klammerarme 10 jeweils über ein Führungselement 3 an einem Klammerträger 4 in einer Verschieberichtung 13 verschiebbar geführt. Die Verschieberichtung 13 ist vorgegeben durch im Klammerträger 4 angeordnete Führungsnuten 40, in welchen jeweils eines der Führungselemente 3 translatorisch bewegbar ist. Die Führungselemente 3 sind in den Führungsnuten 40 verdrehgesichert. Mit anderen Worten wird eine Rotation der Führungselemente 3 durch die Führung in den Führungsnuten 40 verhindert. Ferner sind die Klammerarme 10 an den Führungselementen 3 jeweils verdrehgesichert angeordnet. Die Verdrehsicherung ist hier durch eine Stiftverbindung 7 zwischen dem jeweiligen Klammerarm 10 und seinem Führungselement 3 ausgebildet.

Die Klammervorrichtung 1 weist ferner eine Betätigungseinheit 5 auf, welche ausgebildet ist, die Halteabschnitte 11 aus dem durch das Vorspannelement 2 vorgegebenen Abstand 15 aktiv zu bewegen. Mit anderen Worten kann durch die Betätigungseinheit 5 der Abstand 15 zwischen den Halteabschnitten 11 verändert werden.

Vorliegend weist die Betätigungseinheit 5 ein in einer Verschieberichtung 52, welche vorliegend parallel zur Mittellängsachse 12 orientiert ist bzw. dieser entspricht, verschiebbares Betätigungsglied 50 auf, welches über eine Linearführung 56 an dem Klammerträger 4 geführt ist.

Das Betätigungsglied 50 ist mit den Klammerarmen 10 jeweils über ein schwenkbar an dem Betätigungsglied 50 und schwenkbar an dem jeweiligen Klammerarme 10 angeordnetes Koppelglied 53 gekoppelt.

Die schwenkbare Anbindung zwischen Betätigungsglied 50 und den Koppelgliedern 53 ist mittels einer Bolzenverbindung 57 bereitgestellt. Die schwenkbare Anbindung der Koppelglieder 53 an die Klammerarme 10 ist dadurch bereitgestellt, dass jedes Koppelglied 53 an dem jeweiligen Führungselement 3 des jeweiligen Klammerarme 10 schwenkbar angeordnet ist.

Durch die vorbeschriebene Anbindung des Betätigungsglieds 50 an die Klammerarme 10 über die Koppelglieder 53 und die Führung der Klammerarme 10 entlang der Führungsnuten 40 via der Führungselemente 3 kann eine translatorische Bewegung des Betätigungsgliedes 50 in der Verschieberichtung 52 in eine translatorische Bewegung der Klammerarme 10 in Verschieberichtung 13 transformiert werden.

Das Betätigungsglied 50 weist ferner ein Interaktionselement zum Integrieren mit einer Vorgabevorrichtung zum Vorgeben der Position des Betätigungsgliedes 50, vorliegend in Form einer Rolle 54 auf. Die Rolle 54 kann entlang einer durch die Vorgabevorrichtung vorgegebenen Leitkurve abrollen.

Die Klammerarme 10 und das Vorspannelement 2 sind vorliegend einstückig ausgebildet. Gemäß einer alternativen Ausführungsform können alternativ oder zusätzlich auch die Führungselemente 3 einstückig mit den Klammerarme 10 ausgebildet sein.

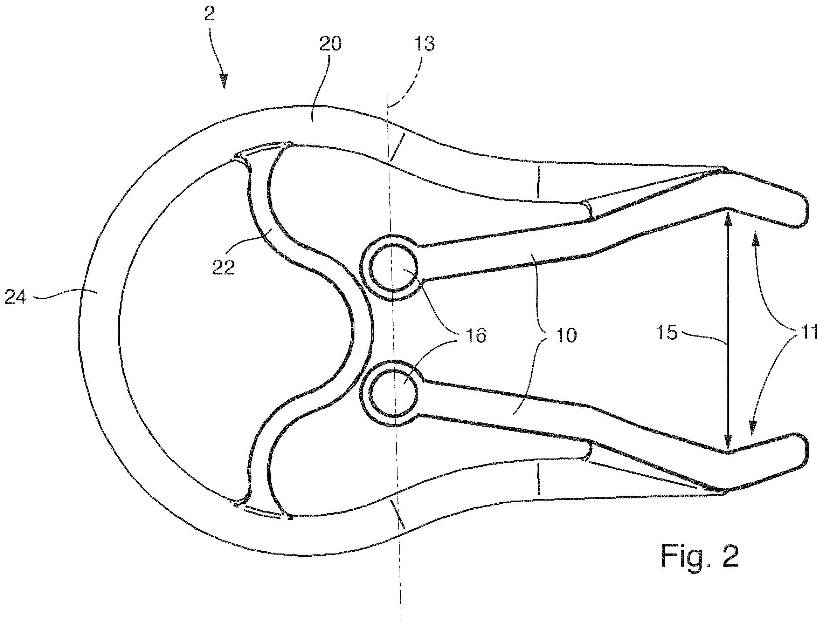

Figur 2 zeigt schematisch eine Draufsicht der aus den Klammerarme 10 und dem Vorspannelement 2 ausgebildeten einteiligen Klammer der Klammervorrichtung 1 aus Figur 1.

Die einteilige Klammer kann aus einem Kunststoff, beispielsweise PEEK, mittels Spritzguss hergestellt sein. Alternativ kann die einteilige Klammer bzw. die Klammerarme 10 und/oder das Vorspannelement 2 auch einen anderen Kunststoff oder ein anderes Material, beispielsweise ein Metall bzw. eine Metalllegierung aufweisen.

Das Vorspannelement 2 umfasst einen Federbügel 20, welcher im Bereich der Halteabschnitte 11 an die Klammerarme 10 angebunden ist und sich von den Klammerarmen 10 um die Klammerarme 10 herum jenseits von Anbindungsabschnitten 16 erstreckt, welche an dem jeweiligen Halteabschnitt 11 des jeweiligen Klammerarme 10 gegenüberliegenden Ende des jeweiligen Klammerarms 10 angeordnet sind. In den Anbindungsabschnitten 16 sind die Führungselemente 3 gehalten. Vorliegend weisen die Anbindungsabschnitte 16 eine kreiszylindrische Form auf, wobei die Verdrehsicherung durch die Stiftverbindung 7 (siehe Figur 1) bereitgestellt ist. Anstelle der kreiszylindrischen Form und der Stiftverbindung 7 können die Anbindungsabschnitte 16 auch eine polygonale Innenkontur aufweisen, wobei die Führungselemente 3 auf Höhe der Anbindungsabschnitte 16 ebenfalls eine entsprechend ausgebildete polygonale Außenkontur aufweisen, sodass durch Interaktion der polygonalen Innenkontur und Außenkontur eine Verdrehsicherung der Klammerarme 10 um die Längsachse der Führungselemente 3 bereitgestellt ist.

Das Vorspannelement 2 umfasst ferner ein Versteifungselement 22, welches einen Mittelbereich 24 des Federbügels 20 versteift.

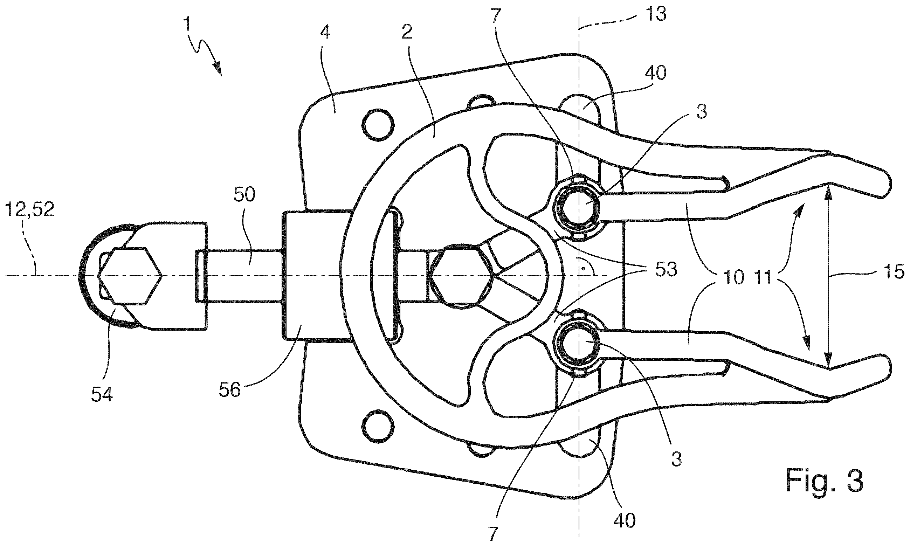

In Figur 3 ist schematisch eine Draufsicht der Klammervorrichtung 1 aus Figur 1 gezeigt, aus welcher zu entnehmen ist, dass die Verschieberichtung 52 des Betätigungsgliedes 50 und die Verschieberichtung 13 der Klammerarme 10 orthogonal zueinander orientiert sind.

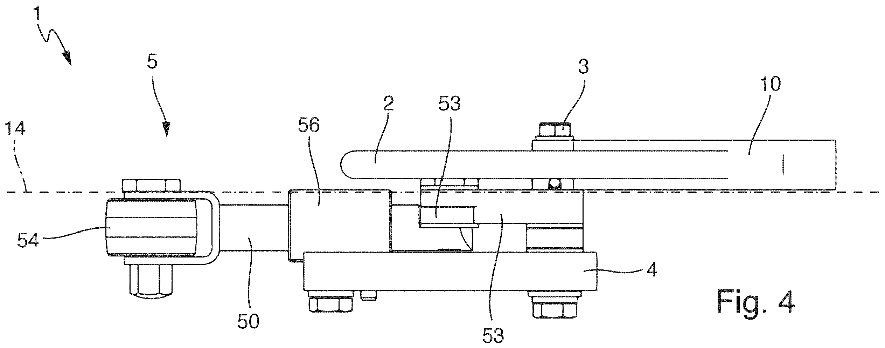

Figur 4 zeigt schematisch eine Seitenansicht der Klammervorrichtung 1 aus Figur 1, aus welcher zu entnehmen ist, dass sich die Klammerarme 10 und die Betätigungseinheit 5 im Wesentlichen in einer Ebene 14 erstrecken. Mit anderen Worten sind die Klammerarme 10 und die Betätigungseinheit 5 im Wesentlichen auf der gleichen Höhe angeordnet, bzw. weisen nur einen geringen Höhenversatz auf. Vorliegend sind die Klammerarme 10 und die Betätigungseinheit 5 in Höhenrichtung gesehen, direkt untereinander angeordnet, wenngleich senkrecht zur Höhenrichtung gesehen die Klammerarme 10 und die Betätigungseinheit 5 teilweise versetzt zueinander, mit anderen Worten hintereinander, angeordnet sind.

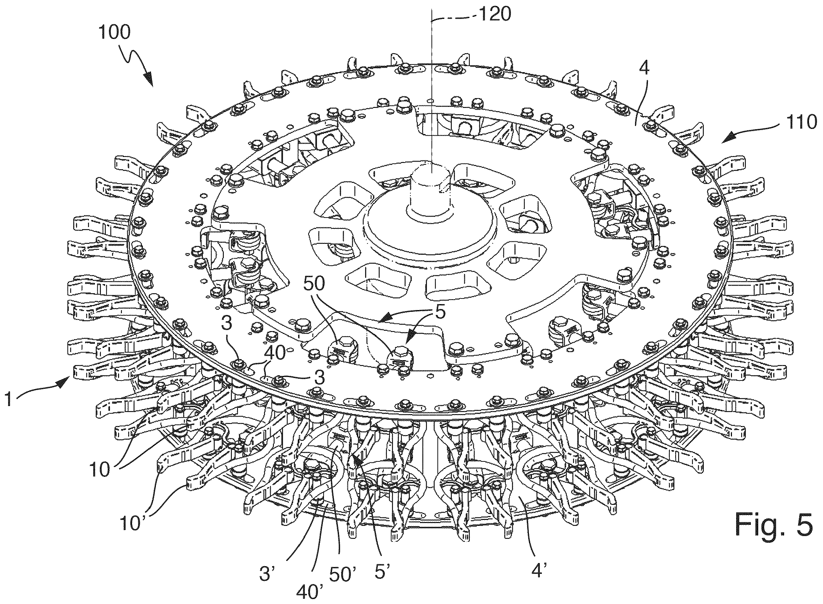

Figur 5 zeigt schematisch eine perspektivische Seitenansicht einer Behälterbehandlungsvorrichtung 100 mit einer Vielzahl von an einer um eine vertikale Drehachse 12 drehbaren Transportvorrichtung 110 angeordneten Klammervorrichtungen 1, welche im Wesentlichen der Klammervorrichtung aus Figur 1 entsprechen. Im Unterschied zu der in Figur 1 gezeigten Klammervorrichtung 1 weisen die Klammervorrichtungen 1 der Behälterbehandlungsvorrichtung 100 aus Figur 5 nicht lediglich ein Paar von Klammerarmen 10 auf, sondern zwei in Richtung der Drehachse 120, welche einer Höhenrichtung der Behälterbehandlungsvorrichtung 100 entspricht, gesehen, übereinander angeordneten Paaren von Klammerarme 10, 10'.

Jedes der Klammerpaare 10, 10' weist jeweils eine eigene Betätigungseinheit 5, 5' mit einem eigenen Betätigungsglied sich, 50, 50' auf.

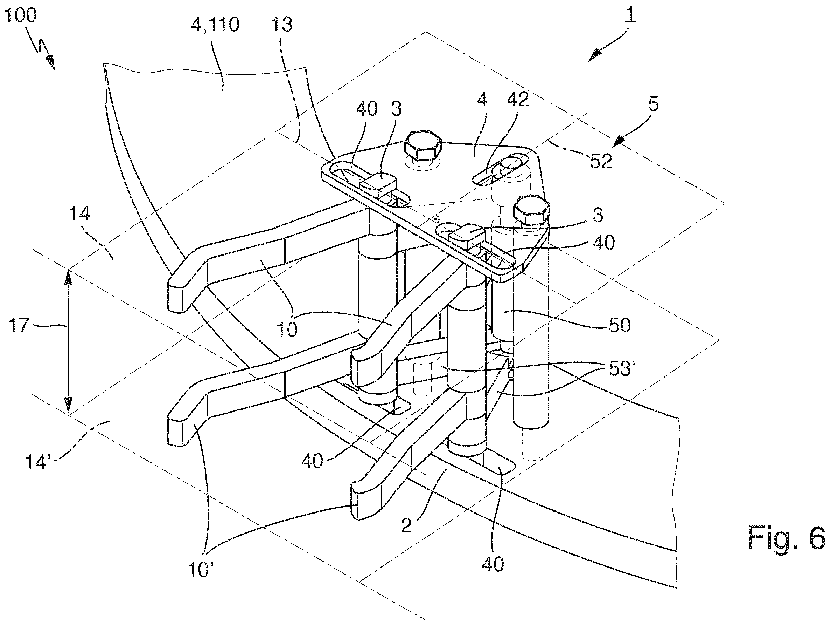

Figur 6 zeigt schematisch eine perspektivische Seitenansicht einer Behälterbehandlungsvorrichtung 100 gemäß einer weiteren Ausführungsform. Anstelle einer einteiligen Klammer wie in Figur 1 gezeigt sind bei der hier gezeigten Klammervorrichtung 1 die Klammerarme 10, 10' eines Paares von Klammerarmen 10, 10' als jeweils separate Einzelteile ausgebildet.

Die Klammervorrichtung 1 ist wiederum "doppelstöckig" aufgebaut. Anders ausgedrückt weist sie ein oberes Paar von Klammerarmen 10 und ein in Höhenrichtung versetzt dazu darunter angeordnetes weiteres Paar von Klammerarmen 10' auf. Beide Paare weisen eine gemeinsame Betätigungseinheit 5 mit einem gemeinsamen Betätigungsglied 50 auf, wobei die Klammerarme 10, 10' jeweils über ein eigenes Koppelglied 53, 53' mit dem gemeinsamen Betätigungsglied 50 verbunden sind. Das Betätigungsglied 50 ist in einer weiteren Führungsnuten 42 des Klammerträgers 4 in Verschieberichtung 52 geführt.

Anders ausgedrückt erstreckt sich das obere Paar von Klammerarmen 10 in einer ersten Ebene 14, wohingegen sich das zweite Paar von Klammerarmen 10'in einer von der ersten Ebene 14 mit einem vorgegebenen Höhenunterschied 17 beabstandeten weiteren Ebene 14' erstreckt.

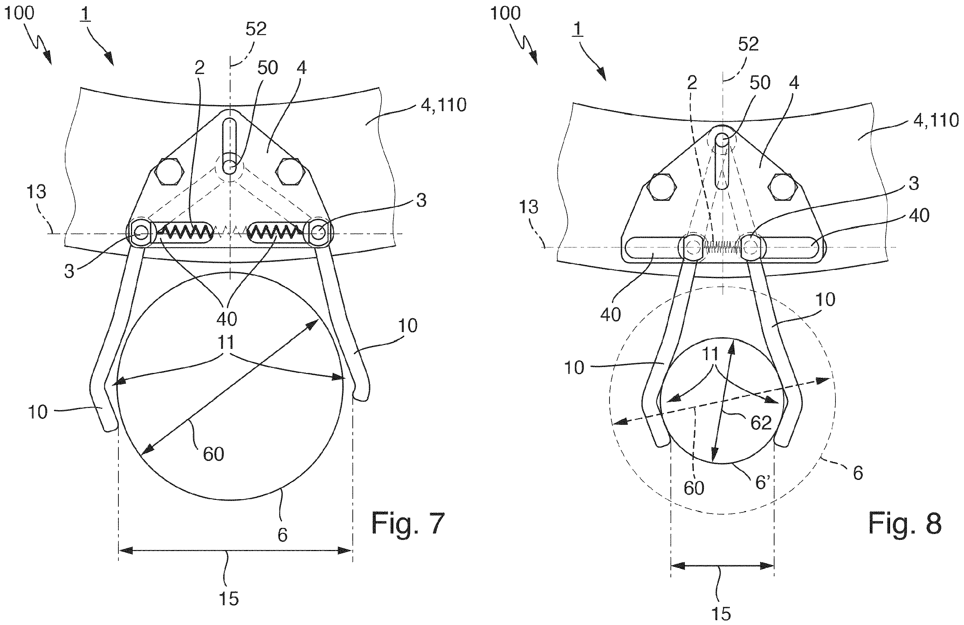

Aus Figur 7 ist schematisch eine Draufsicht der Behälterbehandlungsvorrichtung aus Figur 6 zu entnehmen. Hier ist das Betätigungsglied 50 entgegen der durch das als Zugfeder ausgebildete Vorspannelement 2 bereitgestellten Vorspannung in eine vordere, erste Endposition bewegt, sodass aufgrund der Koppelung des Betätigungsglied 50 mit den Klammerarmen 10 die Klammerarme 10 aus ihrer durch das Vorspannelement 2 vorgegebenen Ruhelage in die in Figur 7 gezeigte Position in Verschieberichtung 13 verschoben wurden. Diese Position der Klammerarme 10 entspricht einer maximalen Öffnungsposition der Klammerarme 10 bzw. der Halteabschnitte 11. Hierbei ist der sich einstellende Abstand 15 der maximal mögliche Abstand zwischen den Halteabschnitten 11. Der Abstand 15 erlaubt dabei das Einführen eines Behälters 6 mit dem Behälterdurchmesser 60. Um den Behälter 6 zu greifen, ist die das Betätigungsglied 50 haltende Kraft von dem Betätigungsglied 50 zu nehmen. Daraufhin bewirkt die durch das Vorspannelement 2 bereitgestellte Vorspannung ein Verschieben der Klammerarme 10 aufeinander zu, sodass die Klammerarme 10 den Behälter 6 greifen und halten.

Figur 8 zeigt schematisch eine weitere Draufsicht der Behälterbehandlungsvorrichtung 100 aus Figur 6. In der Darstellung dieser Figur wirkt keine äußere Kraft auf das Betätigungsglied 50, sodass das Vorspannelement 2 die Klammerarme 10 in eine maximal geschlossene Position vorgespannt. Hierdurch sind die Halteabschnitten 11 entsprechend in den vorgegebenen Abstand 15 vorgespannt. Die Klammerarme 10 halten hierbei via ihrer Halteabschnitte 11 einen Behälter 6', welcher im Vergleich zum Behälter 6 aus Figur 7 einem anderen Typ entspricht und einen kleineren Behälterdurchmesser 62 aufweist, welcher hier einem minimal möglichen Behälterdurchmesser spricht, bei welchem ein entsprechend ausgebildeter Behälter durch die Klammervorrichtung 1 gehalten werden kann.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezuqszeichenliste

- 1: Klammervorrichtung
- 10, 10': Klammerarm
- 11: Halteabschnitt
- 12: Längsmittelachse
- 13: Verschieberichtung
- 14, 14': Ebene
- 15: Abstand
- 16: Anbindungsabschnitt
- 17: Höhenunterschied
- 2: Vorspannelement
- 20: Federbügel
- 22: Versteifungselement
- 24: Mittelabschnitt
- 3: Führungselement
- 4: Klammerträger
- 40: Führungsnut
- 42: Führungsnut
- 5: Betätigungseinheit
- 50: Betätigungsglied
- 52: Verschieberichtung
- 53: Koppelglied
- 54: Rolle
- 56: Linearführung
- 57: Bolzenverbindung
- 6,6': Behälter
- 60: Behälterdurchmesser
- 62: Behälterdurchmesser
- 7: Stiftverbindung

- 100: Behälterbehandlungsvorrichtung
- 110: Transportvorrichtung
- 120: Drehachse

## Patentansprüche

1. Klammervorrichtung (1) zum Halten eines Behälters (6, 6') in einer Behälterbehandlungsvorrichtung, bevorzugt zum Halten eines Getränkebehälters (6, 6') in einem Halsabschnitt oder an einem Bauchabschnitt, umfassend zwei Klammerarme (10, 10'), die jeweils einen Halteabschnitt (11) zum Halten des zu haltenden Behälters (6, 6') aufweisen, und zumindest ein Vorspannelement (2) zum Vorspannen der Halteabschnitte (11) gegeneinander,
**dadurch gekennzeichnet, dass**
die Klammerarme (10, 10') zum Verstellen des zwischen den Halteabschnitten (11) vorliegenden Abstands (15) gegen die Vorspannung des zumindest einen Vorspannelements (2) verschiebbar ausgebildet sind.

2. Klammervorrichtung (1) gemäß Anspruch 1, **dadurch gekennzeichnet, dass** die Klammerarme (10, 10') entlang einer Verschieberichtung (13) parallel verschiebbar ausgebildet sind.

3. Klammervorrichtung (1) gemäß Anspruch 1 oder 2, **dadurch gekennzeichnet, dass** die Klammerarme (10, 10') und das Vorspannelement (2) einstückig miteinander ausgebildet sind.

4. Klammervorrichtung (1) gemäß einem der vorstehenden Ansprüche, **dadurch gekennzeichnet, dass** die Klammerarme (10, 10') jeweils über ein Führungselement (3) an einem Klammerträger (4) verschiebbar geführt sind, wobei bevorzugt die Führungselemente (3) jeweils in einer Führungsnut (40) des Klammerträgers (4) verschiebbar geführt, bevorzugt linear verschiebbar geführt, sind.

5. Klammervorrichtung (1) gemäß einem der vorstehenden Ansprüche, **dadurch gekennzeichnet, dass** eine Betätigungseinheit (5) zum aktiven Bewegen der Halteabschnitte (11) gegen die Vorspannung vorgesehen ist.

6. Klammervorrichtung (1) gemäß dem vorstehenden Anspruch, **dadurch gekennzeichnet, dass** die Betätigungseinheit (5) derart ausgebildet ist, dass eine Verschiebung eines verschiebbaren Betätigungsglieds (50) der Betätigungseinheit (5) eine Verschiebung der Klammerarme (10, 10') bewirkt, wobei bevorzugt eine Verschieberichtung (52) des Betätigungsglieds (50) quer zur Verschieberichtung (13) der Klammerarme (10, 10') ausgerichtet ist.

7. Klammervorrichtung (1) gemäß dem vorstehenden Anspruch, **dadurch gekennzeichnet, dass,** das Betätigungsglied (50) mit den Klammerarmen (10, 10') jeweils über ein schwenkbar an dem Betätigungsglied (50) und schwenkbar an dem jeweiligen Klammerarm (10, 10') angeordnetes Koppelglied (53) gekoppelt ist, **oder dass** das Betätigungsglied (50) zumindest einen Zahnstangenabschnitt umfasst und die Klammerarme (10, 10') jeweils einen Zahnstangenabschnitt aufweisen, wobei jeder der beiden Klammerarme (10, 10') mit seinem Zahnstangenabschnitt jeweils über ein Koppel-Zahnrad mit dem zumindest einen Zahnstangenabschnitt des Betätigungsglieds (50) gekoppelt ist.

8. Klammervorrichtung (1) gemäß dem vorstehenden Anspruch, wenn rückbezogen auf Anspruch **4, dadurch gekennzeichnet, dass** das Koppelglied (53) zum Bereitstellen der schwenkbaren Anbindung des Koppelgliedes (53) an dem Klammerarm (10, 10') an dem Führungselement (3) des Klammerarms (10, 10') schwenkbar angeordnet ist.

9. Klammervorrichtung (1) gemäß Anspruch 5 bis 8, **dadurch gekennzeichnet, dass** die Halteabschnitte (11) in einen vorgegebenen Abstand (15) zueinander vorgespannt sind und der vorgegebene Abstand (15) einer Öffnungsposition der Halteabschnitte (11) entspricht und die Halteabschnitte (11) durch ein Verschieben des Betätigungsgliedes (50) in eine Schließposition bewegbar sind; **oder, dass** die Halteabschnitte (11) in einen vorgegebenen Abstand (15) zueinander vorgespannt sind und der vorgegebene Abstand (15) einer Schließposition der Halteabschnitte (11) entspricht und die Halteabschnitte (11) durch ein Verschieben des Betätigungsgliedes (50) in eine Öffnungsposition bewegbar sind.

10. Klammervorrichtung (1) gemäß einem der Ansprüche 5 bis 8, **dadurch gekennzeichnet, dass** das Betätigungsglied (50) ein Interaktionselement zum Interagieren mit einer Vorgabevorrichtung zum Vorgeben der Position des Betätigungsglieds (50) aufweist, wobei das Interaktionselement bevorzugt in Form eines Gleitelements und/oder einer Rolle (54), bevorzugt ausgebildet zum Gleiten und/oder Abrollen auf einer Leitkurve, ausgebildet ist, wobei das Interaktionselement bevorzugt auf einer den Klammerarmen (10, 10') abgewandten Seite des Betätigungsglieds (50) angeordnet ist.

11. Klammervorrichtung (1) gemäß einem der Ansprüche 4 bis 10, **dadurch gekennzeichnet, dass** die Klammerarme (10, 10') jeweils verdrehgesichert an dem Führungselement (3) angebunden sind, wobei bevorzugt die Verdrehsicherung zwischen Klammerarm (10, 10') und Führungselement (3) in Form eines Formschlusses ausgebildet ist, bevorzugt umfassend eine Stiftverbindung (7) oder eine Polygonkontur, und/oder die Klammerarme (10, 10') jeweils in zwei parallel verlaufenden, zueinander beabstandeten Führungsnuten (40) am Klammerträger (4) geführt sind, wobei bevorzugt die Führungselemente (3) jeweils verdrehgesichert in einer Führungsnut (40) am Klammerträger (4) verschiebbar geführt sind.

12. Klammervorrichtung (1) gemäß einem der Ansprüche 4 bis 9, **dadurch gekennzeichnet, dass** die Klammerarme (10, 10') und die Betätigungseinheit (5) sich im Wesentlichen in einer Ebene (14, 14') erstrecken.

13. Klammervorrichtung (1) gemäß einem der vorstehenden Ansprüche, **dadurch gekennzeichnet, dass** das Vorspannelement (2) einen elastischen, sich von einem Klammerarm (10, 10') zu dem anderen Klammerarm (10, 10') erstreckenden Federbügel (20) aufweist, wobei bevorzugt der Federbügel (20) an den Klammerarmen (10, 10') jeweils zwischen dem Halteabschnitt (11) und einem Führungselement-Anbindungsabschnitt (16) angebunden ist, oder der Federbügel (20) an dem jeweiligen Klammerarm (10, 10') jeweils im Bereich des Halteabschnitts (11) angebunden ist, wobei sich der Federbügel (20) und die Klammerarme (10, 10') bevorzugt im Wesentlichen in einer Ebene erstrecken, wobei der Federbügel (20) bevorzugt ein Versteifungselement (22) zum Versteifen eines Mittelbereichs (24) des Federbügels (20) aufweist.

14. Behälterbehandlungsvorrichtung (100), umfassend eine Transportvorrichtung (110) zum Transportieren eines Behälters (6, 6'),
**dadurch gekennzeichnet, dass**
die Transportvorrichtung (110) zumindest eine Klammervorrichtung (1) gemäß einem der vorstehenden Ansprüche aufweist.
